# EUROPÄISCHE PATENTANMELDUNG

(11) **EP 1 419 690 A1**
(43) Veröffentlichungstag der Anmeldung: **19.05.2004**
(21) Anmeldenummer: 02025407.4
(22) Anmeldetag: 14.11.2002
(51) Int. Cl.: A01K 63/00

(54) **Schaugerät für Wasserlebewesen mit einem Hohlkörper**

(71) Anmelder: Fishtower GmbH, 20146 Hamburg (DE)
(72) Erfinder: Wöltge, Martina c/o Fishtower Gmbh, 20146 Hamburg (DE)
(74) Vertreter: Glawe, Delfs, Moll & Partner

(57) **Zusammenfassung**

Schaugefäß für Wasserlebewesen, insbesondere Fische, mit einem Hohlkörper (2), dessen Wandung einen Innenraum zum Befüllen mit Wasser umgibt, wobei der Hohlkörper (2) zur teilweise eingetauchten Anordnung ausgebildet ist und einen Unterwasserbereich (22) mit einer Flutöffnung (24) und einen Überwasserbereich (21) aufweist, der druckfest und zumindet teilweise durchsichtig ausgeführt ist und mit einem Unterdruckanschluß (3) versehen ist. Damit kann bei eingetauchtem Hohlkörper durch Beaufschlagen mit Unterdruck erreicht werden, daß innerhalb des Hohlkörpers eine Wassersäule über den umgebenden Wasserkörper hinaus aufsteigt, so daß darin befindliche Wasserlebewesen, insbesondere Fische, durch das durchsichtige Material des Hohlkörpers von außen betrachten werden können.

## Beschreibung

Die Erfindung betrifft ein Schaugerät für Wasserlebewesen, insbesondere Fische, mit einem Hohlkörper, dessen Wandung einen Innenraum zum Befüllen mit Wasser umgibt.

Um das Betrachten von Fischen, insbesondere von Zierfischen, zu ermöglichen, werden seit langem Aquarien verwendet. Sie ermöglichen es, durch eine transparente Seitenwand Einblick in die Unterwasserwelt der Fische zu nehmen. Aquarien sind jedoch aufwendig in der Herstellung und im Betrieb. Aus diesem Grund sind sie in ihren Abmessungen auf kleine Dimensionen beschränkt. Sie eignen sich daher meist nur für kleine Fische.

Eine Alternative besteht darin, Fische in einem Teich oder einem Becken zu halten. Das hat den Vorteil, daß im Vergleich zu Aquarien die Abmessungen wesentlich größer sein können und es weniger Aufwand bei Herstellung und Betrieb bedarf. Teiche oder Becken sind auch zum Halten größerer Fische geeignet. Ein gravierender Nachteil liegt jedoch darin, daß die Fische nur von oben und nicht von der Seite beobachtet werden können. Aber auch die Betrachtung von oben ist aufgrund unvermeidlicher Reflexionen an der Wasseroberfläche schwierig. Im Ergebnis können Fische in Teichen oder Becken dadurch nur schwer beobachtet werden.

Die Erfindung hat es sich zur Aufgabe gemacht, diese Nachteile zu vermindern und eine Möglichkeit zu schaffen, mit der Wasserlebewesen in Wasserkörpern beliebiger Größe mit weniger Aufwand gut betrachtet werden können.

Die erfindungsgemäße Lösung liegt in einem Schaugefäß mit den Merkmalen des Anspruchs 1. Vorteilhafte Weiterbildungen sind in den Unteransprüchen angegeben.

Erfindungsgemäß ist ein Schaugefäß für Wasserlebewesen, insbesondere Fische, mit einem Hohlkörper, dessen Wandung einen Innenraum zum Befüllen mit Wasser umgibt, vorgesehen, wobei der Hohlkörper zur teilweise eingetauchten Anordnung ausgebildet ist und einen Unterwasserbereich mit einer Flutöffnung und einen Überwasserbereich aufweist, der druckfest und zumindest teilweise durchsichtig ausgeführt ist und mit einem Unterdruckanschluß versehen ist.

### Nachfolgend seien einige verwendete Begriffe erläutert:

Unter einem Hohlkörper wird ein beliebig geformter Körper verstanden, der einen von einer Wandung umgrenzten Innenraum aufweist. Er kann beispielsweise zylindrische, quaderartige, kugelförmige oder pyramidenähnliche Form aufweisen.

Unter einem Wasserkörper wird ein beliebiges natürliches oder künstliches Gewässer verstanden. Es kann sich um ein stehendes oder fließendes Gewässer handeln, beispielsweise einen See, einen Teich, ein Becken, einen Fluß oder einen Kanal. Die Tiefe des Gewässers ist beliebig, der Grund des Gewässers kann beliebig gestaltet sein.

Unter Flutöffnung wird eine solche Öffnung in der Wandung des Hohlkörpers verstanden, durch die der Innenraum mit der Außenwelt in Verbindung steht. Ist der Hohlkörper in den Wasserkörper eingetaucht, so strömt Wasser mit gegebenenfalls darin befindlichen Wasserlebewesen in den Hohlkörper ein und füllt diesen.

Unter einem Unterdruckanschluß wird eine Einrichtung verstanden, die es ermöglicht, den oberen Bereich des Hohlkörpers mit Unterdruck zu beaufschlagen. Es kann sich um eine vollständige Unterdruckeinrichtung mit einer über eine Leitung angeschlossene Vakuumpumpe oder einfach um einen Anschluß handeln, an den eine externe Unterdruckquelle anschließbar ist.

Die Erfindung beruht auf dem Gedanken, daß der obere Bereich des Innenraums evakuierbar ist, so daß dort ein Unterdruck erzeugt und gehalten werden kann. Das hat die Wirkung, daß beim Eintauchen des unteren Bereichs des Schaugefäßes in einen Wasserkörper eine Wassersäule aufgrund des Unterdrucks in dem Inneren des Gefäßes emporsteigt. Der Wasserspiegel in dem Hohlraum ist dann höher als derjenige des umgebenden Wasserkörpers. Wasserlebewesen, die durch die Flutöffnung in den Hohlkörper einschwimmen und in der Wassersäule nach oben aufsteigen, können durch die durchsichtige Wandung des Hohlkörpers im oberen Bereich betrachtet werden. Dadurch verknüpft die Erfindung die Vorteile der Fischhaltung in einem großen Wasserkörper, wie einem Teich oder einem Becken, mit einer guten Betrachtbarkeit, wie sie bisher nur von Aquarien bekannt war. Die Erfindung erreicht dies auf überraschend einfache Weise, indem sie das für sich genommen seit langem bekannte Prinzip ausnutzt, daß sich eine Wassersäule unter dem Einfluß eines Vakuums über den umgebenden Wasserspiegel hinaus erhöhen läßt. Die Erfindung erreicht so auf frappierend einfache Weise die Erfüllung eines lang gehegten Bedürfnisses, nämlich Fische auch bei Haltung in einem größeren Wasserkörper, beispielsweise einem Becken, interessierten Betrachtern sichtbar zu machen.

Zur Beaufschlagung mit Unterdruck ist vorzugsweise an dem Hohlkörper eine Unterdruckleitung angeordnet, die an dem Unterdruckanschluß mündet. Wird an dem anderen Ende eine Unterdruckquelle angeschlossen, so kann auf diese Weise der benötigte Unterdruck in dem erfindungsgemäßen Schaugefäß hergestellt werden. Bei einer hinreichend gasdichten Ausführung des Hohlkörpers braucht dies nur anfänglich und danach nur noch zu Wartungszwecken vorgenommen zu werden; eine permanente Unterdruckbeaufschlagung kann entbehrlich sein. Zweckmäßigerweise ist die Unterdruckleitung so geführt, daß sie an der Wandung des Hohlkörpers entlang läuft. Bei einer bevorzugten Ausführungsform ist sie sogar in die Wandung des Hohlkörpers integriert. Dadurch ergibt sich eine optisch besonders gefällige Erscheinungsweise des erfindungsgemäßen Schaugefäßes. Dies gilt insbesondere dann, wenn die Unterdruckleitung ebenfalls aus durchsichtigem Material besteht, beispielsweise Glas oder Plexiglas.

Um das Schaugefäß in der gewünschten Lage zu dem umgebenden Wasserkörper zu halten, ist vorzugsweise als Halteeinrichtung ein Schwimmer an dem Hohlkörper angeordnet. Der Schwimmer hält das Schaugefäß in der Weise, daß der Hohlkörper teilweise in den Wasserkörper eingetaucht ist. Der Schwimmer kann in dem Hohlraum angeordnet sein, vorzugsweise ist er aber außen an dem Unterwasserbereich angeordnet. Dadurch ist der Schwimmer den Blicken des Betrachters weitgehend entzogen, ohne den Innenraum des Hohlkörpers zu beeinträchtigen. Bewährt hat es sich, mindestens drei Schwimmer vorzusehen, die als nach außen weisende Flügel ausgebildet sind. Damit wird dem Schaugefäß eine große Stabilität gegenüber Verkippungen gegeben, so daß es robust gegenüber Wellengang ist.

Alternativ kann als Halteeinrichtung ein Ständer unter dem Hohlkörper angeordnet sein, dessen Beine zur Abstützung am Grund des Wasserkörpers ausgebildet sind. Ein solcher Ständer ermöglicht insbesondere bei flachen Wasserkörpern eine besonders einfache und sichere Halterung des Hohlkörpers. Diese ist vor allem bei solchen Wasserkörpern sehr zweckmäßig, die einen ebenen Grund aufweisen, wie es üblicherweise bei Wasserbecken gegeben ist.

Bei einer besonders bevorzugten Ausführungsform, die gegebenenfalls unabhängigen Schutz verdient, ist an dem Hohlkörper eine Futterleitung angeordnet, die im oberen Bereich des Hohlraums mündet. Es hat sich gezeigt, daß durch eine gezielte Fütterung der Wasserlebewesen innerhalb des Schaugefäßes erreicht werden kann, daß die Wasserlebewesen sich häufig innerhalb des Schaugefäßes aufhalten. Eine anfängliche Scheu der Wasserlebewesen gegenüber dem Einschwimmen in die Wassersäule des Hohlkörpers kann auf diese Weise leicht überwunden werden. Ein besonderer Vorteil liegt darin, daß dank des Unterdrucks im oberen Bereich des Hohlraums das Einbringen des Futters durch die Futterleitung besonders vereinfacht ist. Dadurch wird am Anfang der Futterleitung eingebrachtes Futter selbsttätig allein aufgrund der Wirkung des Unterdrucks durch die Futterleitung in den Hohlkörper gesogen. Gesonderte Fördereinrichtungen für das Futter sind nicht erforderlich. Um zu vermeiden, daß durch das Einbringen von Futter der Unterdruck in dem oberen Bereich des Hohlkörpers zusammenbricht, ist zweckmäßigerweise eine Steuereinrichtung vorgesehen, die so ausgebildet ist, daß bei dem Einbringen von Futter durch die Futterleitung zur Aufrechterhaltung des Unterdrucks der Unterdruckanschluß mit Unterdruck beaufschlagt wird.

Es ist zweckmäßig, einen durchsichtigen Bereich der Wandung des Hohlkörpers lupenartig auszuformen. Durch eine solche lupenartige Ausformung der Wandung ergibt sich zusammen mit der Brechungswirkung des Wassers ein deutlich wahrnehmbarer Vergrößerungseffekt, durch den die in der Wassersäule des Hohlkörpers befindlichen Wasserlebewesen größer und damit besser betrachtbar werden.

Zweckmäßigerweise ist die Flutöffnung mit einem Gitter verschlossen, dessen Weite auf die Größe der Wasserlebewesen abgestimmt ist, die das Gitter passieren sollen. Durch das Gitter wird verhindert, daß größere Wasserlebewesen in den Hohlkörper gelangen können. Dadurch wird der Hohlkörper zu einem sicheren Zufluchtsort für kleinere Wasserlebewesen. Dies erhöht die Akzeptanz des Hohlkörpers bei den kleinen Wasserlebewesen weiter, so daß eine für den Betrachter vorteilhafte hohe Populationsdichte in dem Hohlkörper entsteht. Es versteht sich, daß umgekehrt das Gitter auch dazu dienen kann, größere Wasserlebewesen innerhalb der Wassersäule zu halten und gleichzeitig einen hinreichenden Austausch von Wasser und Kleinlebewesen mit dem umgebenden Wasserkörper zu gewährleisten.

Die Erfindung wird nachfolgend beispielhaft anhand der Zeichnungen erläutert, in der vorteilhafte Ausführungsbeispiele dargestellt sind. Es zeigen:
- Fig. 1: eine Seitenansicht eines ersten Ausführungsbeispiels der Erfindung, eingesetzt in ein Wasserbekken;
- Fig. 2: eine Seitenansicht und eine Ansicht von unten eines zweiten Ausführungsbeispiels der Erfindung;
- Fig. 3: eine schematische Ansicht eines dritten Ausführungsbeispiels der Erfindung und
- Fig. 4: eine Seitenansicht eines vierten Ausführungsbeispiels der Erfindung.

Ein Schaugefäß besteht aus einem Hohlkörper 2, der von einem Stativ 41 als Halteeinrichtung über dem Boden 5 eines Beckens gehalten ist, das mit Wasser 6 gefüllt ist, und einem Unterdruckanschluß 3. Der Hohlkörper 2 besteht in dem dargestellten Ausführungsbeispiel vollständig aus einem durchsichtigen Material wie Glas oder Acryl. Das Stativ 41 ist in dem dargestellten Ausführungsbeispiel als Dreibeinstativ ausgeführt, kann aber auch eine andere Anzahl von Beinen aufweisen. Das Stativ ist aus einem hinreichend stabilen und wasserresistenten Material gefertigt. Ferner ist eine Unterdruckquelle 34 vorgesehen, die über einen Unterdruckschlauch 33 mit dem Unterdruckanschluß 3 des Hohlkörpers 2 verbunden ist.

Der Hohlkörper 2 hat in den dargestellten Ausführungsbeispielen die Form eines Zylinders. Dies ist nur eine von vielen möglichen Formen, der Hohlkörper 2 kann an für sich jede beliebige Form aufweisen, solange er innen hohl ausgeführt ist und einen Unter- und einen Überwasserbereich 21, 22 aufweist. Beispiele für andere Formgestaltungen des Hohlkörpers 2 sind Quaderform, Pyramidenform oder Figurform.

Der Hohlkörper 2 ist an seinem oberen Ende mittels eines Dekkels 20 gasdicht abgeschlossen. Der Deckel 20 kann ebenfalls aus durchsichtigem Material bestehen, kann aber auch aus undurchsichtigem Material bestehen und kann auch eine abweichende Formgebung haben, beispielsweise in Gestalt eines pagodenförmigen Dachs 20'. Der Hohlkörper 2 ist in einen Überwasserbereich 21 und einen Unterwasserbereich 22 geteilt. An dem unteren Ende des Unterwasserbereichs 22 ist eine sich über den gesamten Querschnitt des Hohlkörpers 2 erstreckende Flutöffnung 24 vorgesehen.

An der Innenseite des Hohlkörpers 2 ist der Unterdruckanschluß 3 angeordnet. Er umfaßt eine Unterdruckleitung 32, die in unmittelbarer Nähe des oberen Endes des Innenraums des Hohlkörpers 2 eine Mündung 31 aufweist. An ihrem unteren Ende ist die Unterdruckleitung 32 über einen Unterdruckschlauch 33 mit einer Unterdruckeinrichtung 34 verbunden. Die Unterdruckeinrichtung 34 dient zur Erzeugung von Unterdruck, beispielsweise in Gestalt einer Vakuumpumpe. Sie kann an dem Hohlkörper 2 oder dem Stativ 41 angeordnet sein, vorzugsweise ist sie aber zur leichteren Wartung außerhalb des Beckens angeordnet.

Ist der Hohlkörper 2 mittels des Stativs 41 in dem Wasserkörper 6 angeordnet, so wird mittels der Unterdruckeinrichtung 34 das Innere des Hohlkörpers 2 mit Unterdruck beaufschlagt.

Durch den Unterdruck strömt Wasser durch die Flutöffnung 24 in das Innere des Hohlkörpers 2 und steigt in Abhängigkeit von dem Unterdruck in den oberen Bereich des Hohlkörperinneren als Wassersäule empor. Dies hält solange an, bis ein Gleichgewicht zwischen dem Unterdruck in dem oberen Bereich und dem statischen Druck der Höhe der Wassersäule 60 gegenüber der Höhe des Wasserspiegels des umgebenden Wasserkörpers 6 erreicht ist. Die Unterdruckeinrichtung 34 kann dann abgeschaltet werden; gewünschtenfalls kann auch der Unterdruckschlauch 33 abgenommen und die Unterdruckleitung 32 dicht verschlossen werden. Über die Flutöffnung 24 steht die Wassersäule 60 in Verbindung mit dem umliegenden Wasserkörper 6. Die Fische 9 können aus dem Wasserkörper 6 durch die Flutöffnung 24 in das Innere des Hohlkörpers 2 eintreten und in der Wassersäule 60 nach oben schwimmen. Aufgrund des durchsichtigen Materials des Hohlkörpers 2 können sie dort gut von Betrachtern gesehen werden.

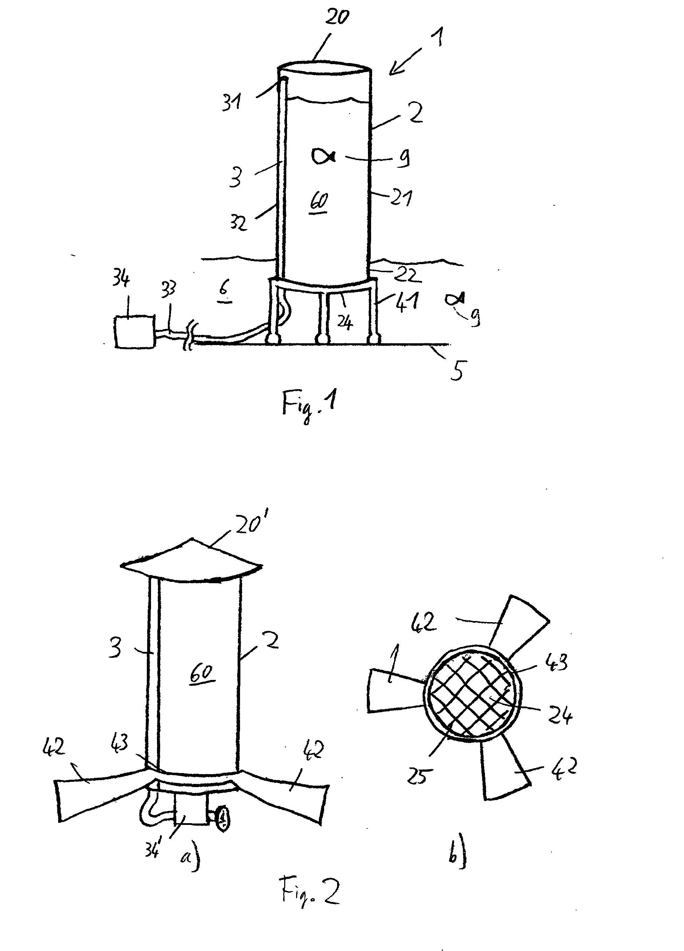

In Fig. 2 ist ein zweites Ausführungsbeispiel dargestellt. Es unterscheidet sich von dem in Fig. 1 dargestellten ersten Ausführungsbeispiel im wesentlichen dadurch, daß als Halteeinrichtung anstelle des Stativs 41 Schwimmer 42 vorgesehen sind, ein anderer Deckel 20' verwendet ist und die Unterdrukkeinrichtung 34' unmittelbar unter dem Schaugefäß angeordnet ist. Mit dem ersten Ausführungsbeispiel übereinstimmende Elemente tragen dieselben Bezugszeichen und brauchen nicht weiter erläutert zu werden; es wird insoweit auf die zu dem ersten Ausführungsbeispiel gegebenen Erläuterungen verwiesen.

Es sind drei Schwimmer 42 vorgesehen, die flügelartig ausgebildet sind. Sie sind mit ihrem inneren Ende an einem Schwimmring 43 angeordnet, der den Hohlkörper 2 außen umgibt und an diesem befestigt ist. Die Schwimmer 42 weisen strahlenartig nach außen, so daß zwischen zwei benachbarten Schwimmern 42 ein Winkel von 120° gebildet ist. Die Schwimmer 42 sind gegenüber der Horizontalen leicht nach unten abgewinkelt angeordnet. Dadurch wird der Hohlkörper 2 in einer besonders stabilen Weise gehalten. Durch die strahlenförmig nach außen weisende Anordnung der Schwimmer 42 ergibt sich eine große, von den Schwimmern 42 erfaßte Fläche; dies wirkt einer Kippgefahr entgegen. Dies ist insbesondere bei solchen Wasserkörpern von Bedeutung, bei denen Strömung und/oder Wellengang herrscht. Der Unterdruckanschluß 3 ist mit einer Unterdruckeinrichtung 34' verbunden, die unmittelbar an der Unterseite des Hohlkörpers 2 angeordnet ist. Es versteht sich, daß die Unterdruckeinrichtung 34' für den Unterwasserbetrieb entsprechend gekapselt ist. Zweckmäßigerweise weist sie ferner eine Energiespeichereinrichtung auf. Dadurch ist dieses Schaugefäß völlig autark. Es kann dadurch insbesondere auch bei größeren Wasserkörpern, wie Seen oder gar Meeren, verwendet werden. Mittels Unterdruck wird auf dieselbe Weise wie bei dem ersten Ausführungsbeispiel eine Wassersäule 60 innerhalb des Hohlkörpers 2 erzeugt.

Die Flutöffnung 24 ist mit einem Gitter 25 versehen. Dessen Maschenweite ist so bemessen, daß größere Fische, insbesondere Raubfische, nicht in das Innere des Hohlkörpers 2 gelangen können. Dadurch entsteht für kleinere Fische 9 dort ein sicherer Aufenthaltsort, so daß sie sich bevorzugt dort aufhalten und so für Betrachter gut sichtbar sind.

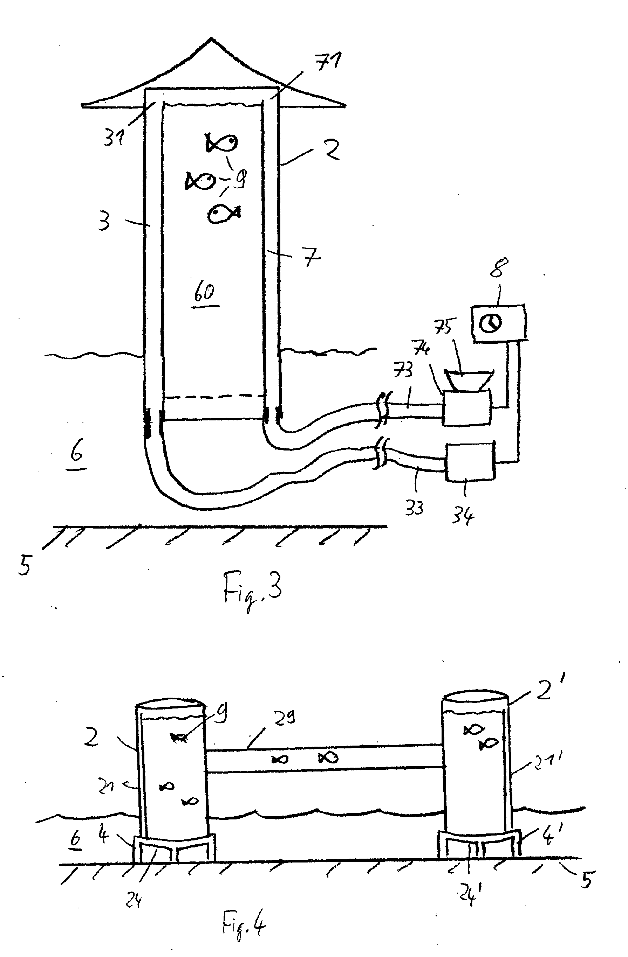

In Fig. 3 ist ein weiteres Ausführungsbeispiel der Erfindung schematisch dargestellt. Mit dem ersten Ausführungsbeispiel übereinstimmende Elemente sind mit denselben Bezugszeichen versehen und werden hier nicht weiter erläutert. Zusätzlich ist bei diesem Ausführungsbeispiel eine Futterleitung 7 vorgesehen, die eine Mündung 71 an dem oberen Ende des Inneren des Hohlkörpers 2 aufweist. An ihrem unteren Ende ist sie über einen Futterschlauch 73 mit einer Futtereingabeeinrichtung 74 verbunden. Diese ist an eine Steuereinrichtung 8 angeschlossen, an die ferner auch die Unterdruckeinrichtung 34 angeschlossen ist. Zum Zuführen von Futter an die Futtereingabeeinrichtung 74 ist ein Aufnahmetrichter 75 vorgesehen.

Um in den Trichter 75 gegebenes Futter zu bestimmten Zeiten mittels der Futtereinrichtung 74 den Fischen 9 innerhalb der Wassersäule 60 zuzuführen, gibt die Steuereinrichtung 8 zu bestimmten Zeitpunkten einen Steuerimpuls an die Futtereingabeeinrichtung 74 ab. Diese gibt daraufhin Futter aus dem Aufnahmetrichter 75 in den Futterschlauch 73. Aufgrund des in dem oberen Bereich des Inneren des Hohlkörpers 2 herrschenden Unterdrucks wird das Futter von der Futtereingabeeinrichtung 74 durch den Futterschlauch 73 und die Futterleitung 7 zur Mündung 71 gesogen, von wo es in die Wassersäule 60 fällt. Der Futtertransport entlang der Futterleitung 7 wird also durch den Unterdruck in dem oberen Bereich des Inneren des Hohlkörpers 2 bewirkt. Eine gesonderte Futtertransporteinrichtung ist daher nicht erforderlich. Um zu verhindern, daß durch das Zuführen des Futters der Unterdruck in dem oberen Bereich des Innenraums des Hohlkörpers 2 zu sehr abfällt, schaltet die Steuereinrichtung 8 zusammen mit der Futtereinrichtung 74 die Unterdruckeinrichtung 34 ein. Dadurch ist sichergestellt, daß ein hinreichender Unterdruck aufrechterhalten wird, so daß die Wassersäule 60 in dem Hohlkörper 2 bestehen bleibt.

Ein weiteres Ausführungsbeispiel der Erfindung ist in Fig. 4 dargestellt. Es unterscheidet sich von den vorhergehenden dadurch, daß ein zweiter Hohlkörper 2' auf einer zweiten Halteeinrichtung 4' vorgesehen ist. Die beiden Hohlkörper 2 und 2' sind in einem gewissen Abstand benachbart zueinander angeordnet. Zwischen ihnen ist eine Verbindungsleitung 29 in der Weise angeordnet, daß sie mit dem Inneren der Hohlkörper 2, 2' in Verbindung steht. Dadurch wird die Möglichkeit geschaffen, daß die Fische 9 aus dem einen Hohlkörper 2 über die Verbindungsleitung 29 in den anderen Hohlkörper 2' gelangen. Es wird dadurch eine Art Fischbrücke geschaffen. Sie stellt für Betrachter eine zusätzliche Bereicherung dar. Um für einen regen Fischverkehr zwischen den Hohlkörpern 2, 2' zu sorgen, ist vorzugsweise nur einer der beiden mit der Futterleitung 7 versehen. Zur weiteren Erhöhung des Fischverkehrs kann vorgesehen sein, daß die Flutöffnungen 24, 24' mit reusenartigen Einrichtungen versehen sind, so daß sie von den Fischen 9 nur in einer Richtung passiert werden können. Dadurch kann erreicht werden, daß die Fische 9 nur durch die Flutöffnung 24 in den Hohlkörper 2 eintreten können und über die Verbindungsleitung 29 in den Hohlkörper 2' schwimmen müssen, um dort gefüttert zu werden, und den Hohlkörper 2' nur über die Flutöffnung 24' verlassen können, um wieder in den umgebenden Wasserkörper 6 zu gelangen. Auf diese Weise kann ein für den Betrachter besonders interessanter intensiver Verkehr von Fischen erreicht werden. Es versteht sich, daß nicht nur zwei Hohlkörper 2, 2' angeordnet zu sein brauchen, sondern es auch mehrere sein, die nach Belieben miteinander verbunden sind.

Die Hohlkörper 2, 2' brauchen auch nicht unbedingt auf einer Ebene zu stehen, sie können auch auf verschiedenen Niveaus stehen, wobei die Verbindungsleitung 29 geneigt verläuft. Durch entsprechende Anpassung des Unterdrucks in dem oberen Bereich der Hohlkörper 2, 2' können leicht Niveauunterschiede ausgeglichen werden.

Ferner kann vorgesehen, daß eine Lichtquelle (nicht dargestellt) in dem Hohlkörper 2 angeordnet ist. Dadurch können die Fische 9 bei Dunkelheit angestrahlt werden, wodurch sich die Wirkung auf den Betrachter weiter verbessert. Außerdem können mittels der Lichtquelle Fische in den Hohlkörper 2 gelockt werden.

## Patentansprüche

1. Schaugefäß für Wasserlebewesen, insbesondere Fische, mit einem Hohlkörper (2), dessen Wandung einen Hohlraum zum Befüllen mit Wasser umgibt,
**dadurch gekennzeichnet, daß**
der Hohlkörper (2) zur teilweise eingetauchten Anordnung ausgebildet ist und einen Unterwasserbereich (22) mit einer Flutöffnung (24) und einen Überwasserbereich (21) aufweist, der druckfest und zumindest teilweise durchsichtig ausgeführt ist und mit einem Unterdruckanschluß (3) versehen ist.

2. Schaugefäß nach Anspruch 1, **dadurch gekennzeichnet, daß** an dem Hohlkörper (2) eine Unterdruckleitung (32) angeordnet ist, die an dem Unterdruckanschluß (3) mündet.

3. Schaugefäß nach Anspruch 2, **dadurch gekennzeichnet, daß** die Unterdruckleitung (32) an der Wandung des Hohlkörper (2) entlang läuft.

4. Schaugefäß nach Anspruch 3, **dadurch gekennzeichnet, daß** die Unterdruckleitung in die Wandung des Hohlkörpers integriert ist.

5. Schaugefäß nach einem der vorgehenden Ansprüche, **dadurch gekennzeichnet, daß** ein durchsichtiger Bereich der Wandung des Hohlkörpers (2) lupenartig geformt ist.

6. Schaugefäß nach einem der vorhergehenden Ansprüche, **dadurch gekennzeichnet, daß** die Flutöffnung (24) mit einem Gitter (25) versehen ist, dessen Gitterweite auf die Größe der Wasserlebewesen abgestimmt ist, die das Gitter (25) passieren sollen.

7. Schaugefäß nach einem der vorhergehenden Ansprüche, **dadurch gekennzeichnet, daß** mehrere Hohlkörper (2, 2') vorgesehen sind, die über eine im Überwasserbereich (21, 21') angeordnete Verbindungsleitung (29) verbunden sind.

8. Schaugefäß nach einem der vorhergehenden Ansprüche, **dadurch gekennzeichnet, daß** als Halteeinrichtung (4) Schwimmer an dem Hohlgefäß (2) angeordnet sind, um es in teilweise eingetauchter Position zu halten.

9. Schaugefäß nach Anspruch 8, **dadurch gekennzeichnet, daß** mindestens drei Schwimmer (42) vorgesehen sind, die als nach außen weisende Flügel ausgebildet sind.

10. Schaugefäß nach einem der Ansprüche 1 bis 7, **dadurch gekennzeichnet, daß** als Halteeinrichtung (4) ein Ständer (41) unter dem Hohlkörper (2) angeordnet ist, dessen Beine zur Abstützung am Grund (5) des Wasserkörpers (6) ausgebildet sind.

11. Schaugefäß nach einem der vorhergehenden Ansprüche, **dadurch gekennzeichnet, daß** an dem Hohlkörper eine Futterleitung (7) angeordnet ist, die im oberen Bereich des Hohlkörpers (2) mündet.

12. Schaugefäß nach Anspruch 11, **dadurch gekennzeichnet, daß** eine Steuereinrichtung vorgesehen ist, die so ausgebildet ist, daß bei dem Einbringen von Futter durch die Futterleitung (7) zur Aufrechterhaltung des Unterdrucks der Unterdruckanschluß mit Unterdruck beaufschlagt wird.
